# FASCICULE DE BREVET EUROPEEN

(11) **EP 0 976 434 B1**
(45) Date de publication et mention de la délivrance du brevet: **02.03.2005**
(21) Numéro de dépôt: 99420167.1
(22) Date de dépôt: 19.07.1999
(51) Int. Cl.: B01D 17/02

(54) **Séparateur de liquides non miscibles**
Separator für nicht mischbare Flüssigkeiten
Separator for nonmiscible liquids

(30) Priorité: 28.07.1998 FR 9809805
(43) Date de publication de la demande: 02.02.2000
(73) Titulaire: Ceresoli, Georges, 38230 Chavanoz (FR); Gilbert, Roger, Dakar (SN); Guibert, Yves, 01150 Lagnieu (FR)
(72) Inventeur: Ceresoli, Georges, 38230 Chavanoz (FR); Gilbert, Roger, Dakar (SN); Guibert, Yves, 01150 Lagnieu (FR)
(74) Mandataire: Bratel, Gérard

(56) Documents cités:
- EP-A- 0 508 814
- WO-A-95/03868
- WO-A-97/32087
- DE-U- 8 901 623

## Description

La présente invention concerne un appareil séparateur de liquides non miscibles, de densités différentes, notamment avec extraction du liquide le plus léger, et recyclage en circuit fermé du liquide le plus lourd. Ainsi, l'invention peut s'appliquer à la séparation de phases liquides constituées d'hydrocarbures et d'eau, de phases organiques et d'eau, ou de tous liquides non miscibles, ceci dans divers domaines industriels, y compris l'industrie alimentaire.

On connaît divers procédés de séparation de liquides non miscibles, qui travaillent à l'air libre, ce qui favorise le développement bactérien dans les milieux liquides à traiter, notamment les milieux aqueux. De tels procédés n'ont rien de commun avec l'objet de la présente invention.

On connaît aussi, par la demande de brevet internationale N° WO 95/03868, un appareil pour la séparation de liquides non miscibles, qui est basé essentiellement sur les turbulences engendrées par des ailettes disposées au sein du système, qui provoqueraient la séparation de l'élément aqueux des hydrocarbures.

En opposition totale avec cet état de la technique, dont le fonctionnement reste très hypothétique, la présente invention fournit un séparateur dont le fonctionnement est basé sur l'obtention d'un flux unidimensionnel, les turbulences étant réduites au minimum, l'appareil proposé étant basé sur la seule mécanique des fluides, et ne présentant aucun organe de séparation en mouvement, à l'exception des moyens de mise en circulation du fluide à traiter.

A cet effet, l'invention a pour objet un séparateur de liquides non miscibles qui comprend essentiellement un corps principal cylindrique, d'axe vertical, dans lequel est disposée une tubulure centrale verticale, partant du sommet dudit corps et s'étendant jusqu'à sa base, où elle se raccorde à une grille horizontale, jointive avec la paroi latérale du corps, tandis que des tubes verticaux plongeants sont disposés dans le volume annulaire délimité entre la tubulure centrale et la paroi latérale du corps, chaque tube vertical plongeant s'étendant vers le bas jusqu'à un niveau intermédiaire, au-dessus de la grille, le sommet de la tubulure centrale étant raccordé à des moyens d'alimentation du fluide à traiter, les sommets des tubes verticaux plongeant étant raccordés à des moyens d'évacuation ou de recyclage du fluide traité, et la partie haute du volume annulaire étant raccordée à des moyens d'évacuation de la phase légère extraite.

On réalise ainsi un appareil de séparation de liquides non miscibles, à fonctionnement continu, à fonctionnement basé sur la mécanique des fluides, sans pièces de séparation en mouvement, et ne faisant en particulier appel ni à la centrifugation, ni à la filtration membranaire, ni à la coalescence, ni à la décantation par gravité statique (qui est une opération longue et volumineuse), ni à l'utilisation de produits chimiques tels que coagulateurs ou floculateurs. Le principe de séparation est le suivant : une première augmentation de la taille des micelles du fluide le plus léger est obtenue au passage dans les moyens d'alimentation, ainsi que dans la descente du fluide par la tubulure centrale du corps principal. Après traversée de la grille, qui est conçue de manière à ne pas réduire les "grosses" micelles déjà formées en amont, le fluide s'écroule de bas en haut dans le volume annulaire, avec formation d'une zone de turbulence au-dessus des extrémités inférieures des tubes plongeant, ce qui s'accompagne d'un nouveau grossissement des micelles, qui se rassemblent dans la partie supérieure du corps principal.

Selon un mode de réalisation de l'invention, le corps principal cylindrique possède, à son sommet, une tête d'admission à laquelle sont raccordés les sommets d'une pluralité de tubes verticaux plongeants, répartis autour de la tubulure centrale, et qui servent à recueillir le fluide traité.

Les moyens d'alimentation en fluide à traiter, raccordés au sommet de la tubulure centrale du corps principal, peuvent comprendre des moyens de pompage, prélevant le fluide à traiter contenu dans une cuve ou un réservoir de stockage. Les sommets des tubes verticaux plongeants peuvent être raccordés, par l'intermédiaire de la tête d'admission, à une tubulure de refoulement retournant à la cuve ou au réservoir de stockage, pour un recyclage de fluide traité, en circuit "fermé".

Il convient de ne pas saturer, en fluide le plus léger, la partie haute du corps principal cylindrique du séparateur ; en effet, la masse de fluide léger extrait augmente au cours du traitement et cette masse ne doit, en aucun cas, se rapprocher des extrémités inférieures des tubes plongeants, dédiés à l'évacuation du liquide traité. Dans ce but, selon une forme d'exécution préférée de l'invention, la partie haute du volume annulaire, délimité entre la tubulure centrale et la paroi latérale du corps principal, est raccordée à un compartiment annexe, situé en partie haute du séparateur, un conduit de soutirage partant dudit compartiment annexe. Avantageusement, des moyens de purge d'air sont prévus dans la partie haute du compartiment annexe, ou au départ du conduit de soutirage, s'il est nécessaire d'évacuer de l'air absorbé dans la cuve ou le réservoir de stockage, dans lequel est puisé le fluide à traiter.

Dans son principe, le séparateur objet de l'invention accepte du liquide pompé à tout niveau de la cuve ou du réservoir de stockage, sans aucune contrainte de concentration de l'un ou de l'autre des fluides à séparer. Cependant, pour réduire le temps de traitement, il est préférable d'extraire en priorité la couche "surnageante", en injectant cette couche mélangée avec une partie du fluide plus lourd, constituant l'élément principal du fluide hétérogène à traiter. A cet effet, les moyens d'alimentation en fluide à traiter comprennent, avantageusement, une crépine d'aspiration, flottante à la surface du fluide à traiter contenu dans la cuve ou le réservoir de stockage, la crépine d'aspiration comportant un collecteur raccordé à un tuyau d'admission, dirigé vers le corps principal. Selon un mode de réalisation préféré, le collecteur de la crépine d'aspiration comporte dans sa partie basse au moins un orifice pour l'entrée du fluide à traiter, et il renferme un tube d'aspiration vertical, de préférence réglable verticalement, dont l'extrémité inférieure est raccordée au tuyau d'admission, le collecteur portant extérieurement des moyens de fixation, de préférence réglables pour des flotteurs. Les orifices d'entrée du collecteur permettent de limiter l'introduction d'air dans le séparateur, notamment en cas d'absorption d'air par des turbulences souvent rencontrées dans les réservoirs de stockage, lorsque le fluide à traiter est en cours d'utilisation dans un système extérieur.

L'invention sera mieux comprise à l'aide de la description qui suit, en référence au dessin schématique annexé représentant, à titre d'exemple, une forme d'exécution de ce séparateur de liquides non miscibles :
Figure 1 est une vue d'ensemble, en coupe verticale, d'un séparateur conforme à la présente invention ;
Figure 2 est une vue en coupe horizontale suivant II-II de figure 1, à échelle grandie, du corps du séparateur ;
Figure 3 est une vue du profil de la crépine d'aspiration, montrant le détail de celle-ci ;
Figure 4 est une vue en plan par dessus de la crépine, en correspondance avec la figure 3.

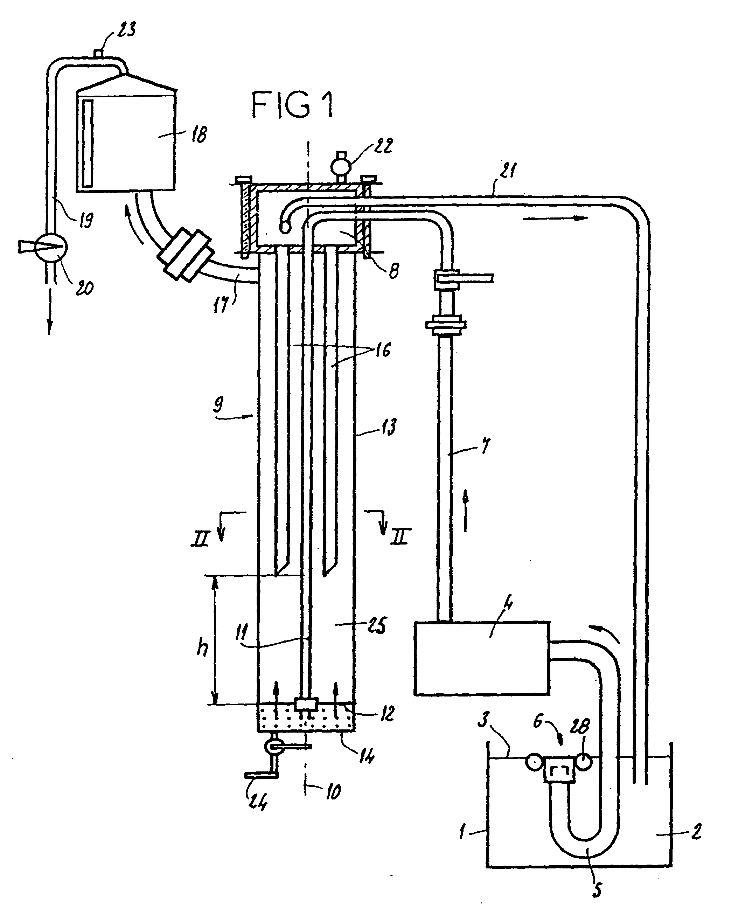

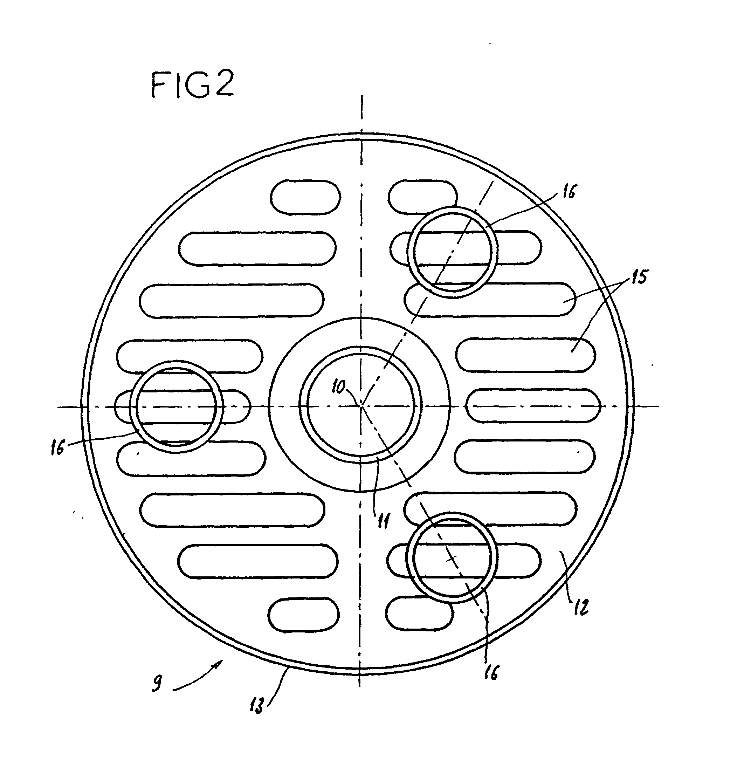

Le séparateur de liquides non miscibles, dont la figure 1 donne une vue d'ensemble, comprend une cuve de stockage 1 recevant un fluide à traiter 2, qui atteint dans la cuve 1 un certain niveau 3. L'alimentation de l'appareil proprement dit, à partir de la cuve de stockage 1, se fait ici par l'intermédiaire d'une pompe 4, constituée d'éléments adaptés au milieu liquide à véhiculer. L'entrée de la pompe 4 est reliée, par un tuyau flexible d'admission 5, à une crépine d'aspiration 6 (détaillée ci-après), flottante à la surface du fluide à traiter 2. La sortie de la pompe 4 est raccordée, par une tubulure d'admission 7 ascendante, à une tête d'admission 8 située au sommet d'un corps principal cylindrique 9, d'axe vertical 10, dont la figure 2 donne une coupe horizontale à un niveau intermédiaire.

A l'intérieur du corps 9 de l'appareil, suivant l'axe vertical 10, est disposée une tubulure centrale verticale 11, partant de la tête d'admission 8 et prolongeant la tubulure d'admission 7 jusqu'à la partie inférieure du corps 9. A sa base, la tubulure centrale 11 est raccordée à une grille annulaire horizontale 12, jointive avec la paroi latérale 13 du corps 9, et située à faible hauteur au-dessus du fond 14 de ce corps. La grille annulaire 12 présente des ouvertures 15 appropriées, dont la forme et la disposition sont indiquées à titre d'exemple, sur la figure 2.

A l'intérieur du corps 9, sont encore disposés trois tubes verticaux plongeants 16, répartis à intervalles angulaires réguliers de 120° autour de la tubulure centrale 11. Chaque tube 16 part de la tête d'admission 8, et s'étend vers le bas jusqu'à un certain niveau intermédiaire, situé à une certaine hauteur h au-dessus de la grille 12.

La partie supérieure du corps 9 communique, par une tubulure coudée 17, avec un compartiment annexe 18 situé dans la partie haute de l'appareil. Un conduit de soutirage 19 part du sommet du compartiment annexe 18, une vanne 20 étant disposée sur ce conduit 19.

Une tubulure de refoulement 21, partant de la tête d'admission 8, revient à la cuve de stockage 1.

Comme le montre la figure 1, des organes de purge d'air 22 et 23 peuvent être disposés sur la tête d'admission 8 et au départ du conduit de soutirage 19, tandis qu'un organe de vidange 24 peut être placé sur le fond 14 du corps 9.

Le fonctionnement d'ensemble du séparateur, décrit jusqu'ici, est le suivant :

La cuve de stockage 1 contenant le fluide à traiter 2, incluant un liquide plus léger que l'autre, il y a lieu de considérer, dans un premier temps, la taille des micelles du fluide léger, qu'il est nécessaire de rassembler afin d'augmenter le volume, donc le poids de ces micelles, dans le but de favoriser la séparation de phases non miscibles. Cette opération préliminaire est effectuée au cours du transfert du fluide à traiter 2, depuis la cuve de stockage 1 jusqu'à la partie basse du corps 9, en passant par le tuyau d'admission 5, la pompe 6, la tubulure d'admission 7 et la tubulure centrale 11. Les parois du circuit hydraulique dans son ensemble, et en particulier des tubulures précitées, sont constituées de matériaux "lisses", afin de réduire autant que possible les rugosités qui engendrent des turbulences néfastes à la séparation des liquides.

Sur son trajet d'admission entre la cuve de stockage 1 et la base du corps 9, le fluide présente ainsi une répartition des vitesses, dans la section notamment circulaire des tubulures, qui part d'une valeur nulle contre la paroi, pour passer par un maximum de turbulences au centre de la section, donc sur l'axe du tube, lieu où le rassemblement des micelles se produit effectivement (sachant que le régime turbulent ne prend pas naissance dès l'entrée du tube, où l'écoulement est encore laminaire, mais seulement après un certain parcours, appelé "longueur d'établissement du régime turbulent"). L'axe des tubulures est donc le lieu où s'effectue le premier grossissement des micelles.

Parvenu ainsi dans la partie basse du corps 9 du séparateur, le fluide traverse de bas en haut la grille annulaire 12, dont les ouvertures 15 sont étudiées pour éviter la dislocation des grosses micelles formées en amont. Le fluide entame alors, à l'intérieur du volume annulaire 25 délimité entre la tubulure centrale 11 et la paroi latérale 13 du corps 9, un trajet ascendant avec écoulement "unidimensionnel", c'est-à-dire un écoulement où tous les filets fluides sont parallèles, les uns aux autres, et constants dans une section droite quelconque.

Dans le conduit formé par le volume annulaire 25, dont la section est beaucoup plus importante que celle de la tubulure d'admission 7, la loi de répartition des vitesses rappelée ci-dessus s'applique toujours, mais avec une courbe de turbulences beaucoup plus "plate" au centre de la section. Il se produit alors un nouveau grossissement des micelles du liquide le plus léger, qui deviennent ici des gouttes, ceci à un niveau situé au-dessus du niveau h précédemment défini.

Ainsi le fluide traité, c'est-à-dire le fluide dont la phase la plus légère a été éliminée, s'écoule par les tubes verticaux plongeants 16, dont les orifices d'entrée se situent au-dessus de la zone de turbulences. La dynamique permet au fluide léger séparé de poursuivre son trajet ascendant, dans le volume annulaire 25, vers la partie haute du corps 9 du séparateur, laissant ainsi un fluide "lourd", exempt de phase légère, s'évacuer vers la cuve de stockage 1 en parcourant successivement les tubes verticaux plongeants 16, la tête d'admission 8 et la tubulure de refoulement 21.

Le fluide léger se trouve ainsi "piégé" dans la partie haute du corps 9 du séparateur et, de là, il passe par la tubulure coudée 17, de diamètre approprié au transfert du liquide surnageant (en fonction de la viscosité du fluide léger à éliminer) vers le compartiment annexe 18. L'organe de purge d'air 23, à fonctionnement automatique, permet ici de prendre en compte la présence de turbulences de surface, impliquant une absorption d'air, dans la cuve de stockage 1 dans laquelle est puisé le fluide à traiter 2.

Le fluide léger peut être soutiré manuellement ou automatiquement, par le conduit 19, selon le degré d'automatisme souhaité par l'utilisateur.

Le cycle de séparation, décrit ci-dessus, s'établit de façon permanente et continue, lorsque l'appareil reste en fonctionnement.

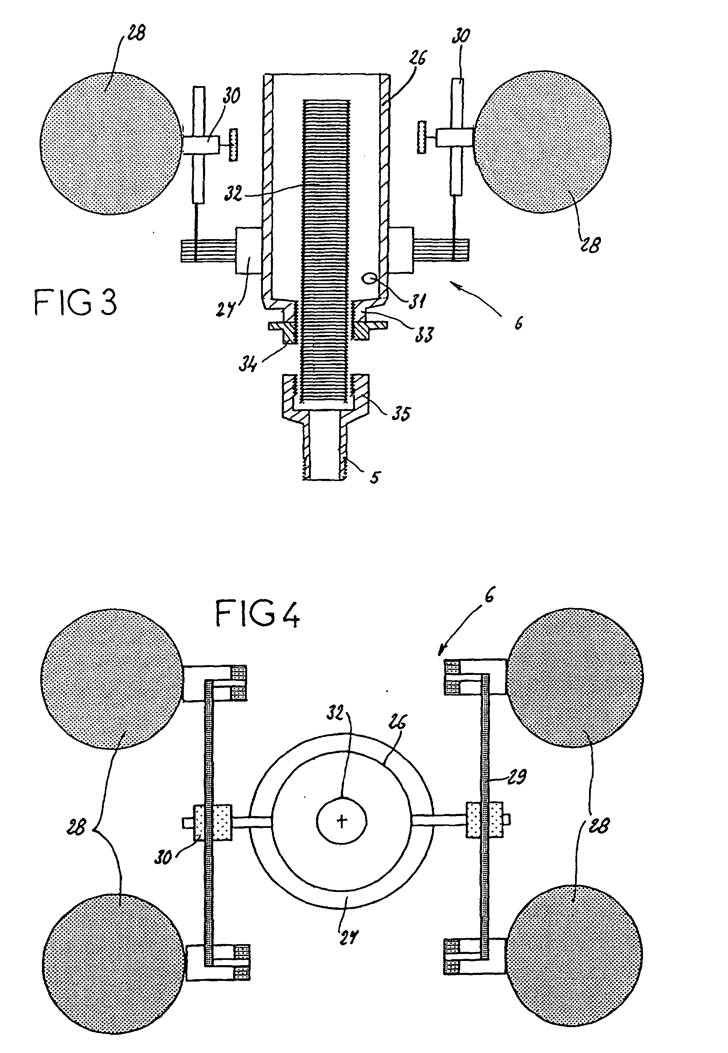

La crépine d'aspiration 6, bien visible sur les figures 3 et 4 auxquelles on se référera maintenant, permet l'extraction du fluide à traiter 2 pratiquement au niveau 3, de manière à pomper en priorité la couche surnageante. La crépine 6 comprend un collecteur central cylindrique 26, d'axe vertical, pourvu extérieurement d'un collier 27, qui porte en deux points diamétralement opposés des organes de fixation réglables pour des flotteurs 28. Les flotteurs 28, au nombre total de quatre, sont groupés par paires, les deux flotteurs 28 de chaque paire étant reliés par une traverse horizontale 29, pourvue en son milieu d'une fixation 30, réglable verticalement, qui la relie au collier 27.

Le collecteur 26 de la crépine 6 présente, dans sa partie basse, au moins un orifice latéral 31 permettant l'entrée du fluide à traiter 2, et le maintien d'un niveau de fluide constant dans ce collecteur 26, tout en réduisant au minimum l'introduction d'air. Suivant l'axe du collecteur 26 est disposé un tube d'aspiration vertical 32, fileté extérieurement, qui est vissé dans une virole taraudée complémentaire 33 formant le fond du collecteur 26. Une bague de serrage 34 est encore vissée sur la partie inférieure du tube d'aspiration 32, et serrée contre la virole 33.

Enfin, le tuyau flexible d'admission 5, qui plonge dans la cuve de stockage 1, comporte un embout 35 qui est vissé sur l'extrémité inférieure du tube d'aspiration 32.

Ainsi, la crépine d'aspiration 6, flottant sur le fluide à traiter 2 grâce à ses flotteurs 28, est raccordée au tuyau flexible d'admission 5 qui, selon sa longueur et sa souplesse, autorise le fonctionnement de l'appareil pour un niveau 3 variable, à l'intérieur de certaines limites. Le réglage vertical des fixations 30 des flotteurs 28, ainsi que du tube d'aspiration 32 vissable plus ou moins dans la virole 33, permet d'ajuster la position de l'extrémité supérieure du tube d'aspiration 32 par rapport au niveau 3 du fluide à traiter 2, et d'aspirer ainsi la couche de surface sur l'épaisseur désirée.

On notera que les flotteurs 28, déployés vers l'extérieur des traverses de liaison 29 dans la position illustrée au dessin, peuvent être rabattus aussi vers l'intérieur, pour des questions d'encombrement.

Le recyclage du liquide, exempt de la phase légère extraite, par la tubulure de refoulement 11, ne gêne en rien le fonctionnement de l'appareil et notamment de la crépine d'aspiration 6.

Le séparateur de produits liquides non miscibles, précédemment décrit, est applicable entre autres à :
- la séparation huile/eau dans le secteur de la machine-outil,
- la séparation d'hydrocarbures dans l'industrie de pétrole,
- la séparation des corps gras rencontrés dans l'industrie agroalimentaires,
- la séparation de l'eau de mer et du pétrole brut lors de la vidange des navires pétroliers, etc...

Dans toutes ces applications, le séparateur objet de l'invention permet une récupération et une réutilisation des deux phases liquides séparées, ou de l'une au moins de ces phases, contrairement aux procédés de destruction qui, de plus, engendrent soit une pollution environnementale, soit un coût de destruction élevé.

L'on ne s'éloignerait pas du cadre de l'invention, telle que définie dans les revendications, en remplaçant l'alimentation du séparateur en liquide à traiter par pompage, telle que décrite et illustrée au dessin, par une alimentation gravitaire ou par tout autre système d'injection forcée, ou encore en remplaçant le tuyau flexible d'admission, raccordé à la crépine, par un système de soufflet qui lui serait équivalent.

## Revendications

1. Séparateur de liquides non miscibles, **caractérisé en ce qu'**il comprend essentiellement un corps principal cylindrique (9), d'axe vertical (10), dans lequel est disposée une tubulure centrale verticale (11), partant du sommet dudit corps (9) et s'étendant jusqu'à sa base, où elle se raccorde à une grille horizontale (12), jointive avec la paroi latérale (13) du corps (9), et située à faible hauteur au-dessus du fond (14) de ce corps (9) tandis que des tubes verticaux plongeants (16) sont disposés dans le volume annulaire (25) délimité entre la tubulure centrale (11) et la paroi latérale (13) du corps (9), chaque tube vertical plongeant (16) s'étendant vers le bas jusqu'à un niveau intermédiaire (h), au-dessus de la grille (12), le sommet de la tubulure centrale (11) étant raccordé à des moyens (1 à 8) d'alimentation en fluide à traiter (2), les sommets des tubes verticaux plongeants (16) étant raccordés à des moyens (21) d'évacuation ou de recyclage du fluide traité, et la partie haute du volume annulaire (25) précité étant raccordée à des moyens (17 à 20) d'évacuation de la phase légère extraite.

2. Séparateur de liquides non miscibles selon la revendication 1, **caractérisé en ce que** le corps principal cylindrique (9) possède, à son sommet, une tête d'admission (8) à laquelle sont raccordés les sommets d'une pluralité de tubes verticaux plongeants (16), répartis autour de la tubulure centrale (11).

3. Séparateur de liquides non miscibles selon la revendication 1 ou 2, **caractérisé en ce que** les moyens d'alimentation en fluide à traiter, raccordés au sommet de la tubulure centrale (11) du corps principal (9), comprennent des moyens de pompage (4), prélevant le fluide à traiter (2) contenu dans une cuve ou un réservoir de stockage (1).

4. Séparateur de liquides non miscibles selon l'ensemble des revendications 2 et 3, **caractérisé en ce que** les sommets des tubes verticaux plongeants (16) sont raccordés, par l'intermédiaire de la tête d'admission (8), à une tubulure de refoulement (21) retournant à la cuve ou au réservoir de stockage (1).

5. Séparateur de liquides non miscibles selon l'une quelconque des revendications 1 à 4, **caractérisé en ce que** la partie haute du volume annulaire (25), délimité entre la tubulure centrale (11) et la paroi latérale (13) du corps principal (9), est raccordée (17) à un compartiment annexe (18), situé en partie haute du séparateur, un conduit de soutirage (19, 20) partant dudit compartiment annexe (18).

6. Séparateur de liquides non miscibles selon la revendication 5, **caractérisé en ce que** des moyens de purge d'air (23) sont prévus dans la partie haute du compartiment annexe (18), ou au départ du conduit de soutirage (19, 20).

7. Séparateur de liquides non miscibles selon la revendication 3 ou 4, **caractérisé en ce que** les moyens d'alimentation en fluide à traiter comprennent une crépine d'aspiration (6), flottante à la surface (3) du fluide à traiter (2) contenu dans la cuve ou le réservoir de stockage (1), la crépine d'aspiration (6) comportant un collecteur (26) raccordé à un tuyau d'admission (5), dirigé vers le corps principal (9).

8. Séparateur de liquides non miscibles selon la revendication 7, **caractérisé en ce que** le collecteur (16) de la crépine d'aspiration (6) comporte dans sa partie basse au moins un orifice (31) pour l'entrée du fluide à traiter, et renferme un tube d'aspiration vertical (32), de préférence réglable verticalement, dont l'extrémité inférieure est raccordée au tuyau d'admission (5), le collecteur (26) portant extérieurement des moyens de fixation (27, 29, 30), de préférence réglables, pour des flotteurs (28).

9. Séparateur de liquides non miscibles selon la revendication 8, **caractérisé en ce que** le tube d'aspiration vertical (32) de la crépine d'aspiration (6) est fileté extérieurement, et vissé dans une virole taraudée complémentaire (33) formant le fond du collecteur (26).

10. Séparateur de liquides non miscibles selon la revendication 8 ou 9, **caractérisé en ce que** le collecteur (26) de la crépine d'aspiration (6) est pourvu extérieurement d'un collier (27), qui porte en deux points diamétralement opposés des organes de fixation réglables pour les flotteurs (28), au nombre total de quatre et groupés par paires, les deux flotteurs (28) de chaque paire étant reliés par une traverse horizontale (29), pourvue en son milieu d'une fixation (30), réglable verticalement, qui la relie au collier (27).

## Patentansprüche

1. Separator für nicht mischbare Flüssigkeiten, **dadurch gekennzeichnet, dass** er im wesentlichen einen zylinderförmigen Hauptkörper (9) mit vertikaler Achse (10) umfasst, in dem ein vertikales zentrales Rohr (11) angeordnet ist, das vom oberen Ende dieses Körpers (9) ausgeht und sich bis zu seiner Basis erstreckt, wo es mit einem horizontalen Gitter (12) verbunden ist, das an der Seitenwand (13) des Körpers (9) anliegt und sich in geringer Höhe oberhalb des Bodens (14) dieses Körpers (9) befindet, während vertikale Tauchrohre (16) in dem ringförmigen Raum (25) angeordnet sind, der sich zwischen dem zentralen Rohr (11) und der Seitenwand (13) des Körpers (9) befindet, wobei sich jedes vertikale Tauchrohr (16) bis zu einer Zwischenhöhe (h) oberhalb des Gitters (12) nach unten erstreckt, und wobei das obere Ende des zentralen Rohrs (11) an Vorrichtungen (1 bis 8) für die Zuleitung der zu behandelnden Flüssigkeit (2) angeschlossen ist, und wobei die oberen Enden der vertikalen Tauchrohre (16) an Mittel (21) für die Ableitung oder die Rückleitung der behandelten Flüssigkeit angeschlossen sind, und wobei der obere Teil des vorgenannten ringförmigen Raums (25) an Vorrichtungen (17 bis 20) für die Ableitung der extrahierten leichten Phase angeschlossen ist.

2. Separator für nicht mischbare Flüssigkeiten nach Anspruch 1, **dadurch gekennzeichnet, dass** der zylinderförmige Hauptkörper (9) an seinem oberen Ende einen Zuleitungskopf (8) besitzt, an den die oberen Enden einer Vielzahl von vertikalen Tauchrohren (16) angeschlossen sind, die um das zentrale Rohr (11) herum verteilt sind.

3. Separator für nicht mischbare Flüssigkeiten nach Anspruch 1 oder 2, **dadurch gekennzeichnet, dass** die Vorrichtungen für die Zuleitung der zu behandelnden Flüssigkeit, die am oberen Ende des zentralen Rohrs (11) des Hauptkörpers (9) angeschlossen sind, Pumpvorrichtungen (4) umfassen, die die zu behandelnde Flüssigkeit (2), die in einem Fass oder einem Sammelbehälter (1) enthalten ist, ansaugen.

4. Separator für nicht mischbare Flüssigkeiten nach der Gesamtheit der Ansprüche 2 und 3, **dadurch gekennzeichnet, dass** die oberen Enden der vertikalen Tauchrohre (16) über den Zuleitungskopf (8) mit einer Rückführ-Rohrleitung (21) verbunden sind, die in das Fass oder den Sammelbehälter (1) zurückführt.

5. Separator für nicht mischbare Flüssigkeiten nach einem der Ansprüche 1 bis 4, **dadurch gekennzeichnet, dass** der obere Teil des ringförmigen Raums (25), der sich zwischen dem zentralen Rohr (11) und der Seitenwand (13) des Hauptkörpers (9) befindet, mit einem angebauten Behälter (18) verbunden ist (17), der im oberen Bereich des Separators angeordnet ist, wobei ein Entnahme-Rohr (19, 20) von diesem angebauten Behälter (18) abgeht.

6. Separator für nicht mischbare Flüssigkeiten nach Anspruch 5, **dadurch gekennzeichnet, dass** Vorrichtungen (23) zur Entlüftung im oberen Bereich des angebauten Behälters (18) oder am Anfang des Entnahme-Rohrs (19, 20) vorgesehen sind.

7. Separator für nicht mischbare Flüssigkeiten nach Anspruch 3 oder 4, **dadurch gekennzeichnet, dass** die Vorrichtungen für die Zuleitung der zu behandelnden Flüssigkeit einen Ansaugkopf (6) umfassen, der auf der Oberfläche (3) der zu behandelnden Flüssigkeit (2) schwimmt, die in dem Fass oder dem Sammelbehälter (1) enthalten ist, wobei der Ansaugkopf (6) einen Sammler (26) hat, der mit einem Zuleitungsrohr (5) verbunden ist, das zum Hauptkörper (9) hin gerichtet ist.

8. Separator für nicht mischbare Flüssigkeiten nach Anspruch 7, **dadurch gekennzeichnet, dass** der Sammler (26) des Ansaugkopfes (6) in seinem unteren Bereich mindestens eine Öffnung (31) für den Zufluss der zu behandelnden Flüssigkeit aufweist, und ein vertikales Lüftungsrohr (32) einschließt, das vorzugsweise vertikal verstellbar ist, und dessen unteres Ende mit dem Zuleitungsrohr (5) verbunden ist, wobei der Sammler (26) außen vorzugsweise verstellbare Befestigungsmittel (27, 29, 30) für Schwimmkörper (28) hat.

9. Separator für nicht mischbare Flüssigkeiten nach Anspruch 8, **dadurch gekennzeichnet, dass** das vertikale Lüftungsrohr (32) des Ansaugkopfes (6) an der Aussenseite mit Gewinde versehen ist und in einen komplementären Stirnring (33) mit Innengewinde geschraubt ist, der den Boden des Sammlers (26) bildet.

10. Separator für nicht mischbare Flüssigkeiten nach Anspruch 8 oder 9, **dadurch gekennzeichnet, dass** der Sammler (26) des Ansaugkopfes (6) aussen mit einem Ring (27) versehen ist, der an zwei diametral entgegengesetzten Punkten verstellbare Befestigungselemente für die Schwimmkörper (28) aufweist, die insgesamt vier sind und paarweise angeordnet sind, wobei die zwei Schwimmkörper (28) jedes Paares durch eine horizontale Traverse (29) verbunden sind, die jeweils in ihrer Mitte eine vertikal verstellbare Befestigung (30) haben, die sie mit dem Ring (27) verbindet.

## Claims

1. A separator for immiscible liquids, **characterised in that** it essentially comprises a main cylindrical body (9) with a vertical axis (10), in which a central vertical pipe (11) is disposed which starts from the top of said body (9) and extends to the base thereof where it is joined to a horizontal grille (12) which is contiguous with the sidewall (13) of the body (9) and which is situated at a height slightly above the base (14) of said body (9), whilst vertical immersion tubes (16) are disposed in the annular volume (25) which is delimited between the central pipe (11) and the sidewall (13) of the body (9), each vertical immersion tube (16) extending towards the base as far as an intermediate level (h) above the grille (12), the top of the central pipe (11) being connected to means (1 to 8) for supplying fluid to be treated (2), the tops of the vertical immersion tubes (16) being connected to means (21) for removing or recycling treated fluid, and the top part of the aforementioned annular volume (25) being connected to means (17 to 20) for removing the extracted light phase.

2. A separator for immiscible liquids according to claim 1, **characterised in that** at its top the main cylindrical body (9) has an inlet head (8) to which are connected the tops of a plurality of vertical immersion tubes (16) which are distributed around the central pipe (11).

3. A separator for immiscible liquids according to claim 1 or 2, **characterised in that** the means for supplying fluid to be treated, which are connected to the top of the central pipe (11) of the main body (9), comprise pumping means (4) which draw off liquid to be treated (2) which is contained in a tank or storage reservoir (1).

4. A separator for immiscible liquids according to claims 2 and 3 together, **characterised in that** the tops of the vertical immersion tubes (16) are connected via the inlet head (8) to a discharge pipe (21) which returns to the tank or storage reservoir (1).

5. A separator for immiscible liquids according to any one of claims 1 to 4, **characterised in that** the top part of the annular volume (25), which is delimited between the central pipe (11) and the sidewall (13) of the body (9), is connected (17) to an ancillary compartment (18) situated at the top part of the separator, a take-off duct (19, 20) leading from said ancillary compartment (18).

6. A separator for immiscible liquids according to claim 5, **characterised in that** air purge means (23) are provided in the top part of the ancillary compartment (18) or at the start of the take-off duct (19, 20).

7. A separator for immiscible liquids according to claim 3 or 4, **characterised in that** the means for supplying fluid to be treated comprise a suction rose (6) which floats on the surface (3) of the fluid to be treated (2) contained in the tank or storage reservoir (1), the suction rose (6) comprising a collector (26) connected to an inlet pipe (5) which is led towards the main body (9).

8. A separator for immiscible liquids according to claim 7, **characterised in that** in its lower part the collector (16) of the suction rose (6) comprises at least one opening (31) for the inlet of the fluid to be treated and contains a vertical suction tube (32), which is preferably vertically adjustable and the lower end of which is connected to the inlet pipe (5), the collector (26) bearing external fixing means (27, 29, 30), which are preferably adjustable, for floats (28).

9. A separator for immiscible liquids according to claim 8, **characterised in that** the vertical suction tube (32) of the suction rose (6) is externally threaded and is screwed into a complementary threaded ring (33) forming the base of the collector (26).

10. A separator for immiscible liquids according to claim 8 or 9, **characterised in that** the collector (26) of the suction rose (6) is provided externally with a collar (27) which at two diametrically opposed points bears adjustable fixing elements for the floats (28), which number four in total and are grouped in pairs, the two floats (28) of each pair being joined by a horizontal crosspiece (29) which is provided in its middle with a vertically adjustable fixing means (30) which attaches it to the collar (27).
